# EUROPEAN PATENT APPLICATION

(11) **EP 2 733 480 A1**
(43) Date of publication of application: **21.05.2014**
(21) Application number: 12811806.4
(22) Date of filing: 18.06.2012
(51) Int. Cl.: G01N 21/85, A61J 3/06, G06M 11/00, G06T 1/00

(54) **TABLET INSPECTION DEVICE AND TABLET INSPECTION METHOD**

(30) Priority: 13.07.2011 JP 2011154545
(71) Applicant: Panasonic Corporation, Osaka 571-8501 (JP)
(72) Inventor: TANIMOTO, Takanobu, Osaka 540-6207 (JP); YAMASHITA, Hitoshi, Osaka 540-6207 (JP); GOTOU, Makoto, Osaka 540-6207 (JP); MATSUKAWA, Yoshihiko, Osaka 540-6207 (JP)
(74) Representative: Grünecker, Kinkeldey, Stockmair & Schwanhäusser
(86) International application number: PCT/JP2012/003962
(87) International publication number: WO 2013/008392

(57) **Abstract**

A tablet inspection device (11) includes a lighting unit (13) configured to emit parallel light to a medicine package (21) enclosing therein a semi-transparent tablet that is capable of transmitting light, a camera unit (12) configured to capture an image of the medicine package (21) irradiated with the parallel light, so as to obtain a transmission image of the medicine package (21), and an image processing unit (15) configured to detect, as an area of the semi-transparent tablet, an area having a center part and a periphery part which has brightness lower than brightness of the center part, in the transmission image.

## Description

### [Technical Field]

The present invention relates to a tablet inspection device and a tablet inspection method which are used for inspecting a tablet enclosed in a medicine package.

### [Background Art]

Hospital facilities, pharmacies, and the like are required to precisely perform dispensing work with respect to a prescription. Thus, inspection on the dispensing is performed after the dispensing work in hospital facilities, pharmacies, or the like. In the dispensing work, a tablet sorting machine first performs sorting work to wrap a plurality of types of tablets in a medicine package. The medicine package is an example of a medicine bag. The inspection on the dispensing work is performed in such a manner that the tablet inspection device performs tablet inspection by binarizing an image obtained by shooting an image of the medicine package, and then counting the number of the tablets in the binarized image.

There are various types of tablets. For example, tablets include a semi-transparent tablet which is capable of transmitting light and an opaque tablet which blocks light. Meanwhile, the medicine package is typically made up of a transparent film. Accordingly, in an image of the medicine package which encloses the semi-transparent tablet and the opaque tablet, it is difficult to discriminate an image of the semi-transparent tablet from an image of the film serving as a background. If the image is binarized using one threshold value of the image, an image of the opaque tablet can be detected, but an image of the semi-transparent tablet and an image of the film which is the background cannot be distinguished from each other. This may prevent the semi-transparent tablet from being detected. In other words, the tablet inspection device may not be able to count the number of tablets precisely. In view of the above, Patent Literature (PTL) 1 proposes a tablet inspection device which performs tablet inspection on a medicine package which wraps a semi-transparent tablet and an opaque tablet.

FIG. 18 is a circuit block diagram which shows main parts in the tablet inspection device of PTL 1. FIG. 19 is a graph which shows a relationship between brightness of an image and the number of pixels for each brightness.

As shown in FIG. 18, the tablet inspection device according to PTL 1 includes a lighting device (not shown) which emits light to a medicine package enclosing therein a tablet, an image-capturing unit (not shown) which captures an image of the medicine package enclosing therein the tablet, an opaque tablet recognition unit 5 which counts the number of the opaque tablet in the medicine package from an image output from the image-capturing unit, a semi-transparent tablet recognition unit 6 which counts the semi-transparent tablets in the medicine package from the image output from the image-capturing unit, and a calculation controlling circuit 7.

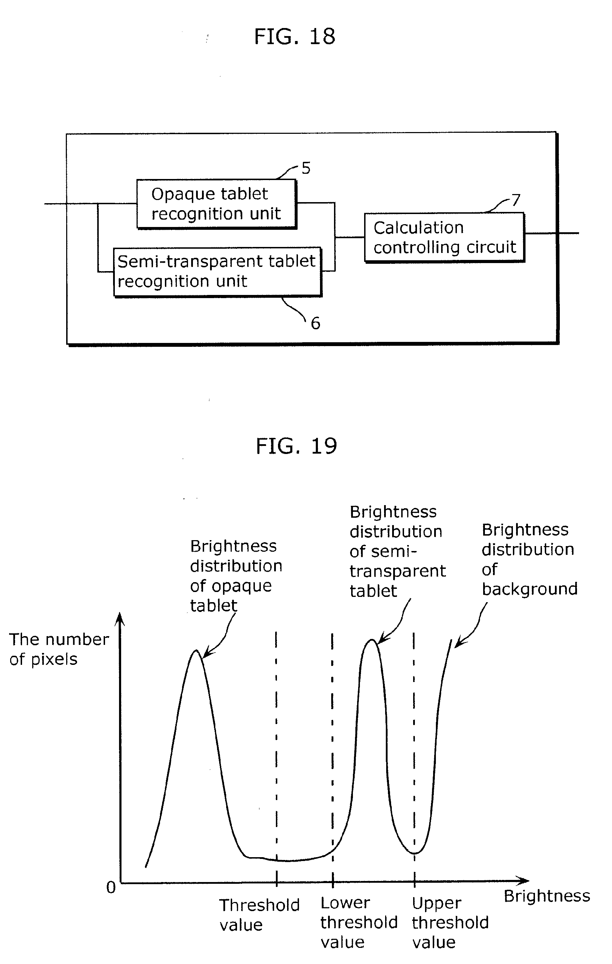

In an image obtained by exposing, from below, the opaque tablet and the semi-transparent tablet with the light from the lighting device, the brightness of a background which forms an image of the medicine package is high because the medicine package is capable of transmitting illumination light from below. This is because that the medicine package is made up of a transparent film and a white-band zone for printing. Since the opaque tablet does not transmit light, the brightness of the image of the opaque tablet is low. On the other hand, the semi-transparent tablet transmits a certain level of light. Therefore, the brightness of the image of the semi-transparent tablet is higher than that of the opaque tablet. In view of the above, the opaque tablet recognition unit 5 in PTL 1 sets, in an image, a threshold value of the opaque tablet in a range between brightness distribution of the image of the semi-transparent tablet and that of the opaque tablet, as shown in FIG. 19. Thus, a pixel having brightness lower than the threshold value of the opaque tablet is detected as the image of the opaque tablet, to thereby count the number of the opaque tablet.

The brightness distribution of the image of the semi-transparent tablet is often lower than the brightness distribution of the image of the background. In view of the above, the semi-transparent tablet recognition unit 6 of PTL 1 sets a lower threshold value in the range between the brightness distribution of the image of the semi-transparent tablet and the brightness distribution of the image of the opaque tablet, as well as sets an upper threshold value in a range between the brightness distribution of the image of the semi-transparent tablet and the brightness distribution of the image of the background, as shown in FIG. 19. Then, pixels which indicate brightness in a range between the upper threshold value and the lower threshold value is detected as an image of the semi-transparent tablet, to thereby count the number of the semi-transparent tablets.

The calculation controlling circuit 7 in the PTL 1 adds up data of the tablet number counted by the opaque tablet recognition unit 5 and the semi-transparent tablet recognition unit 6, and outputs the number of all tablets enclosed in the medicine package.

Such a tablet inspection device is used, so that the tablet inspection can be performed on the medicine package which encloses therein the semi-transparent tablet.

The PTL 2 discloses that when transillumination is performed on a transparent medicine, a silhouette of the medicine is observed in which a center part thereof is bright and a periphery thereof is dark, due to refraction of light.

The PTL 3 discloses that in a state that an upper surface of sorted bag is irradiated with parallel light, a camera provided in an upper portion performs shooting an image in color, while a camera provided in a lower portion shoots an image of a silhouette of a medicine in the bag.

### [Citation List]

### [Patent Literature]

[PTL 1] Japanese unexamined patent application publication No. 7-282219
[PTL 2] Japanese unexamined patent application publication No. 2004-234132
[PTL 3] Japanese unexamined patent application publication No. 2008-18230

### [Summary of Invention]

### [Technical Problem]

Semi-transparent tablets have, however, variety of transmittance according to the type. In other words, the brightness of an image of a semi-transparent tablet differs depending on the type. For this reason, some types of semi-transparent tablets have brightness distribution which partially overlaps brightness distribution of a background. Such an image of the semi-transparent tablet cannot be separated from the background at the upper threshold value shown in FIG. 19. This prevents the semi-transparent tablet recognition unit 6 from detecting the semi-transparent tablet. Accordingly, precise tablet inspection cannot be performed.

Even if a phenomenon disclosed in PTL 2 is used in which a center part of a semi-transparent tablet increases in brightness, some type of the semi-transparent tablet has the brightness distribution of the image of the semi-transparent tablet partially overlapping the brightness distribution of the background, like the case in PTL 1. For this reason, even if the phenomenon disclosed in PTL 2 is used, the semi-transparent tablet may not be detected. This prevents the precise tablet inspection.

In order to solve the aforementioned conventional problem, the present invention aims to provide a tablet inspection device and a tablet inspection method which are capable of performing inspection on a medicine package which encloses therein a semi-transparent tablet.

### [Solution to Problem]

In order to solve the above problem, a tablet inspection device according to an aspect of the present invention includes: a lighting unit configured to emit parallel light to a medicine package enclosing therein a semi-transparent tablet that is capable of transmitting light; an image-capturing unit configured to capture an image of the medicine package irradiated with the parallel light, so as to obtain a transmission image of the medicine package; and an image processing unit configured to detect, as an area of the semi-transparent tablet, an area having a center part and a periphery part which has brightness lower than brightness of the center part, in the transmission image.

### [Advantageous Effects of Invention]

According to an aspect of the present invention, a tablet inspection device and a tablet inspection method can be provided which are capable of performing inspection on a medicine package which encloses therein a semi-transparent tablet.

### [Brief Description of Drawings]

[FIG. 1] FIG. 1 is a schematic configuration view which shows a tablet inspection device according to Embodiment 1 of the present invention.
[FIG. 2] FIG. 2 is a perspective view which shows a parallel-light conversion unit in the tablet inspection device according to Embodiment 1 of the present invention.
[FIG. 3] FIG. 3 is a plan view which shows a medicine package according to Embodiment 1 of the present invention.
[FIG. 4] FIG. 4 is a diagram which schematically shows a transmission image of the medicine package shot by a camera unit according to Embodiment 1 of the present invention.
[FIG. 5] FIG. 5 is a diagram which shows a transmission image of the medicine package actually shot by the camera unit according to Embodiment 1 of the present invention.
[FIG. 6] FIG. 6 is a diagram which schematically shows a transmission image of the medicine package which is irradiated with diffused light.
[FIG. 7] FIG. 7 is a diagram which shows an actual transmission image of the medicine package which is irradiated with the diffused light.
[FIG. 8] FIG. 8 is a conceptual diagram which shows a state in which the diffused light is transmitted through a semi-transparent tablet.
[FIG. 9] FIG. 9 is a conceptual diagram which shows a state in which parallel light is transmitted through the semi-transparent tablet, according to Embodiment 1 of the present invention.
[FIG. 10] FIG. 10 is a diagram for illustrating the parallel light emitted by a lighting unit according to Embodiment 1 of the present invention.
[FIG. 11] FIG. 11 is a flowchart which shows a tablet inspection method using the tablet inspection device according to Embodiment 1 of the present invention.
[FIG. 12] FIG. 12 is a schematic view which shows a positional relationship between a camera unit and a placing table according to Embodiment 2 of the present invention.
[FIG. 13] FIG. 13 is a plan view which shows a medicine package and the placing table according to Embodiment 2 of the present invention.
[FIG. 14] FIG. 14 is a diagram which shows a transmission image of a medicine package shot by the camera unit according to Embodiment 2 of the present invention.
[FIG. 15] FIG. 15 is a conceptual diagram for illustrating parallel light passing through a semi-transparent tablet according to Embodiment 2 of the present invention.
[FIG. 16] FIG. 16 is a schematic view which shows a positional relationship between the camera unit and the placing table according to Embodiment 2 of the present invention.
[FIG. 17] FIG. 17 is a plan view which shows a medicine package according to Embodiment 3 of the present invention.
[FIG. 18] FIG. 18 is a circuit block diagram which shows main parts in a tablet inspection device according to PTL 1.
[FIG. 19] FIG. 19 is a graph which shows a relationship between brightness of an image and the number of pixels for each brightness, according to PTL 1.

### [Description of Embodiments]

Hereinafter, an embodiment of the present invention is described with reference to the drawings. It should be noted that structural components having the same configuration are allocated with the same reference numeral, and description of the components may be omitted. The drawings schematically show each of the structural elements centrically for easy comprehension.

### [Embodiment 1]

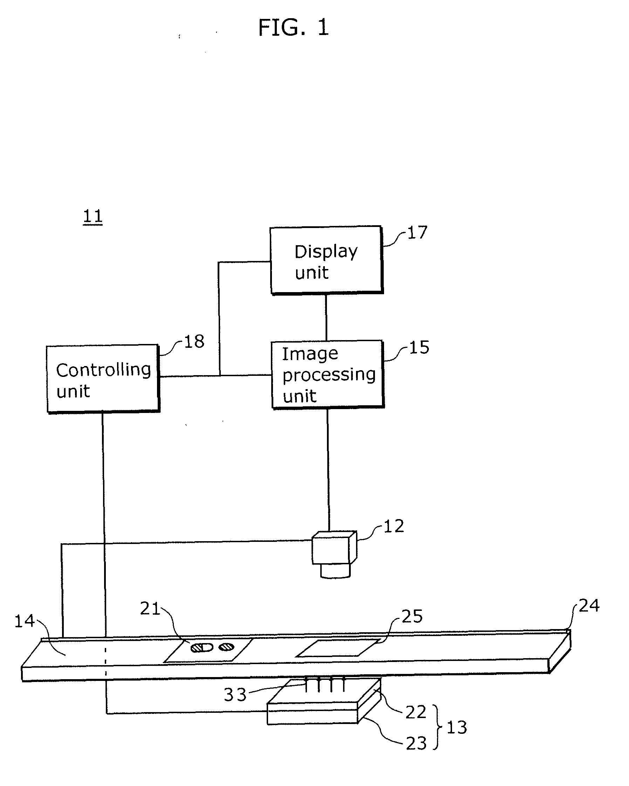

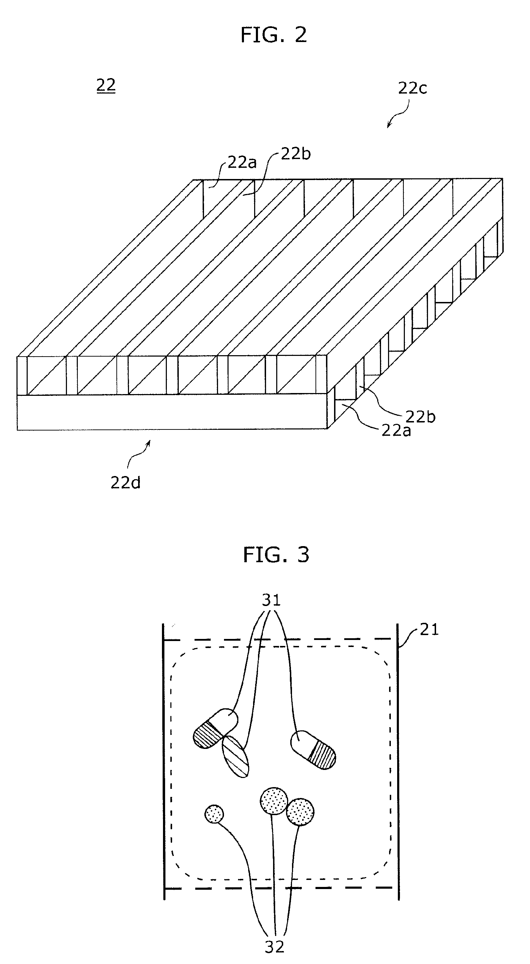

FIG. 1 is a schematic configuration view which shows a tablet inspection device 11 according to Embodiment 1 of the present invention. FIG. 2 is a perspective view which shows a parallel-light conversion unit 22 in the tablet inspection device 11 according to Embodiment 1.

The tablet inspection device 11 is a device for performing inspection on a medicine package 21 as to whether or not a proper tablet is enclosed therein in accordance with a prescription. It should be noted that the medicine package 21 is prepared in such a manner that a non-illustrated tablet sorting machine wraps tablets in accordance with the prescription. For inspection, the tablet inspection device 11 counts tablets based on an obtained image of the medicine package 21, and collates the number of the counted tablets with the number of the tablets denoted in the prescription, to thereby determine whether or not the tablet is properly enclosed in the medicine package 21.

The medicine package 21 is a bag in which an opaque tablet blocking light and a semi-transparent tablet transmitting light at constant light-transmittance are enclosed. Although there are various types of medicine package 21, the medicine package 21 according to Embodiment 1 is made up of a transparent film which is capable of transmitting light.

The semi-transparent tablet is a medicine prepared by wrapping a liquid medicine with a transparent film. Accordingly, light-transmission degrees of the semi-transparent tablets differ depending on a light-transmission degree of the liquid medicine. Since the semi-transparent tablet encloses therein a liquid medicine, the semi-transparent tablet has a rounded shape.

The opaque tablet is a tablet which blocks light. Many of typical tablets are opaque tablets.

The tablet inspection device 11 according to the present embodiment includes a camera unit 12 serving as an example of an image-capturing unit, a lighting unit 13, a placing table 14, an image processing unit 15, a display unit 17, and a controlling unit 18. The controlling unit 18 controls respective operations of the camera unit 12, the lighting unit 13, the placing table 14, the image processing unit 15, and the display unit 17.

The camera unit 12 includes a picture element (not shown) and a lens (not shown). The camera unit 12 captures an image of the medicine package 21 irradiated with parallel light rays, at a position corresponding to a transparent plate 25 on the placing table 14, so as to obtain a transmission image of the medicine package 21. The transmission image includes an image of the semi-transparent tablet, in which brightness of the periphery thereof is low. The camera unit 12 is placed at a position which faces a placing surface of the placing table 14 on which the medicine package 21 is placed, and is also directly above the lighting unit 13. The camera unit 12 shoots, from above, an image of the medicine package 21 irradiated with the parallel light from underneath of the placing table, so as to obtain the transmission image of the medicine package 21.

The lighting unit 13 emits the parallel light to the medicine package 21 in which the semi-transparent tablet and the opaque tablet are enclosed. The lighting unit 13 includes, for emitting the parallel light, a parallel-light conversion unit 22 which converts diffused light to the parallel light, and a light emitting unit 23 which emits the diffused light. The light emitting unit 23 includes, inside thereof, a configuration of causing a light emitting diode (LED) to be emitted.

The parallel-light conversion unit 22 is a member which converts the diffused light to the parallel light. As shown in FIG. 2, the parallel-light conversion unit 22 includes laminated bodies 22c and 22d. Each of the laminated bodies 22c and 22d is formed by alternately laminating a transmission band 22a which transmits visible light and an absorption band 22b which absorbs the visible light. Here, the laminated bodies 22c and 22d are arranged in such a manner that a lamination direction of the transmission band 22a and the absorption band 22b in the laminated body 22c and a lamination direction of the transmission band 22a and the absorption band 22b in the laminated body 22d are orthogonal to each other. The parallel-light conversion unit 22 transmits only a light ray 33 which enters at a predetermined incident angle among light rays emitted from the lighting unit 13, and absorbs light which enters at an angle other than the predetermined incident angle. The parallel-light conversion unit 22 does not transmit the light except for the light ray 33 which reaches the parallel-light conversion unit 22 at the predetermined incident angle, so that the light ray 33 emitted from the parallel-light conversion unit 22 becomes each of parallel light rays. The parallel light rays converted from the diffused light by the parallel-light conversion unit 22 do not have the same illumination angle, but have few variations in the illumination angle. As the parallel-light conversion unit 22 according to the present Embodiment 1, a louver film is used.

The placing table 14 includes a guide unit 24 provided along an end portion of the placing surface on which the medicine package 21 is placed, and a transparent plate 25 which transmits the light from the lighting unit 13. The guide unit 24 includes, in an inside thereof, a driving roller and a guiding roller (both are not shown). The driving roller rotates in a state that an end of the medicine package 21 is sandwiched between the driving roller and the guiding roller, to thereby cause the medicine package 21 to move along the guide unit 24. The placing table 14 is provided between the camera unit 12 and the lighting unit 13.

The image processing unit 15 detects an outline of an image of the semi-transparent tablet from the transmission image of the medicine package 21, using a property that when the semi-transparent tablet is irradiated with the parallel light, the brightness of the periphery of the image of the semi-transparent tablet becomes low. After the transmission image of the medicine package 21 is obtained by the camera unit 12, the image processing unit 15 detects a semi-transparent tablet image 52 included in a transmission image 26 of the medicine package 21, and an opaque tablet image 51 included in the transmission image 26 of the medicine package 21. Then, the image processing unit 15 compares a sum of the number of the detected semi-transparent tablets and the number of the detected opaque tablets with the number of tablets described in the prescription, so as to determine whether or not the proper number of tablets are enclosed in the medicine package 21. The image processing unit 15 performs inspection on the number of the tablets based on the result of the determination.

The display unit 17 is connected to the image processing unit 15, to thereby display an image of a tablet detected by the image processing unit 15. Accordingly, a person who conducts the inspection can perform the inspection visually using the display unit 17.

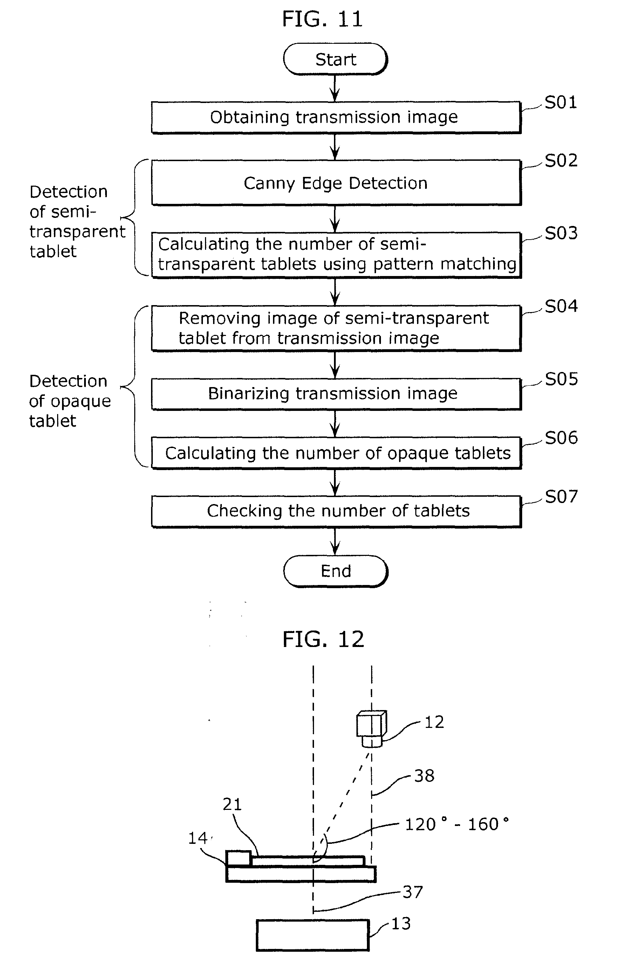

The tablet inspection device 11 performs the inspection on the tablets in the method described above. The inspection on the number of tablets performed by the tablet inspection device 11 will be described later in detail, using a flowchart shown in FIG. 11.

Next, a reason why the semi-transparent tablet can be precisely detected is described, using the transmission image of the medicine package 21, obtained by the camera unit 12.

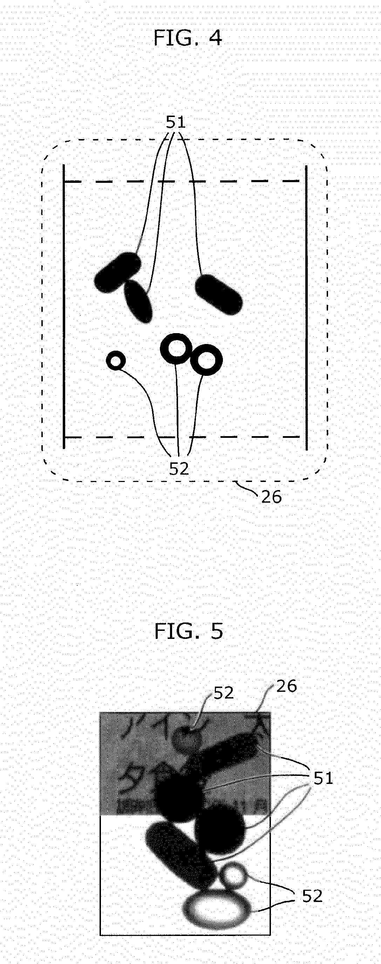

FIG. 3 is a plan view which shows a medicine package 21 according to Embodiment 1. FIG. 4 is a diagram which schematically shows the transmission image 26 of the medicine package 21 shot by the camera unit 12 according to Embodiment 1. FIG. 5 is a diagram which shows the transmission image 26 of the medicine package 21 actually shot by the camera unit 12 according to Embodiment 1.

As shown in FIG. 3, the opaque tablet 31 and the semi-transparent tablet 32 are wrapped by the medicine package 21. The tablet inspection device 11 obtains the transmission image 26 of the medicine package 21 using the camera unit 12. The transmission image 26 obtained by shooting the image of the medicine package 21 using the camera unit 12, with being irradiated with the parallel light, includes the opaque tablet image 51 and the semi-transparent tablet image 52, as shown in FIGS. 4 and 5. The opaque tablet 31 blocks light, so that brightness of the overall opaque tablet image 51 in the transmission image 26 obtained by the camera unit 12 becomes low. On the other hand, in the semi-transparent tablet image 52 in the transmission image 26, the periphery has low brightness whereas the center has high brightness.

Next, a conventional example in which the diffused light is used for capturing the transmission image and an example of the present embodiment in which the parallel light is used therefor are compared, and a reason why the semi-transparent tablet image 52 having the periphery with low brightness is generated using the parallel light is described.

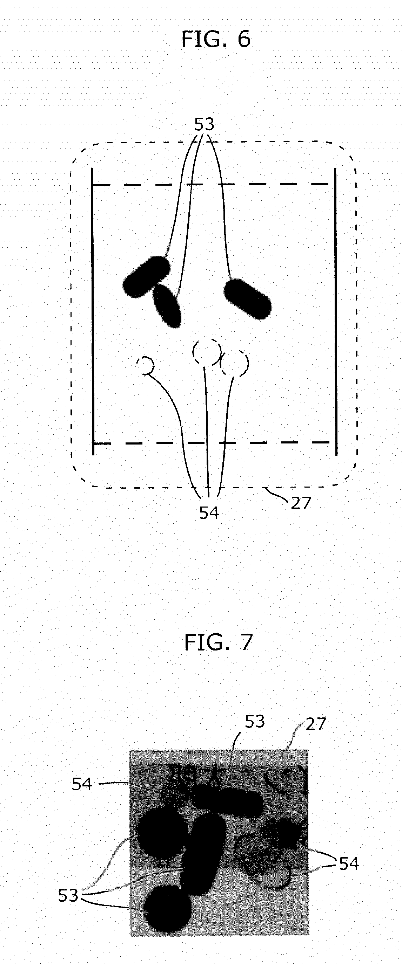

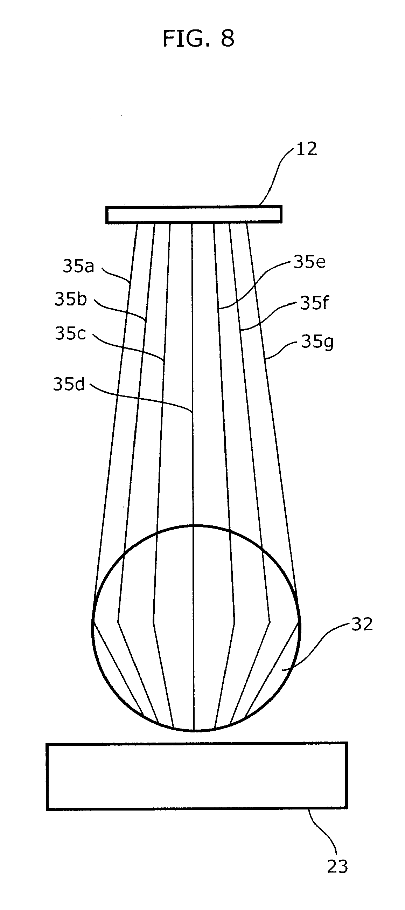

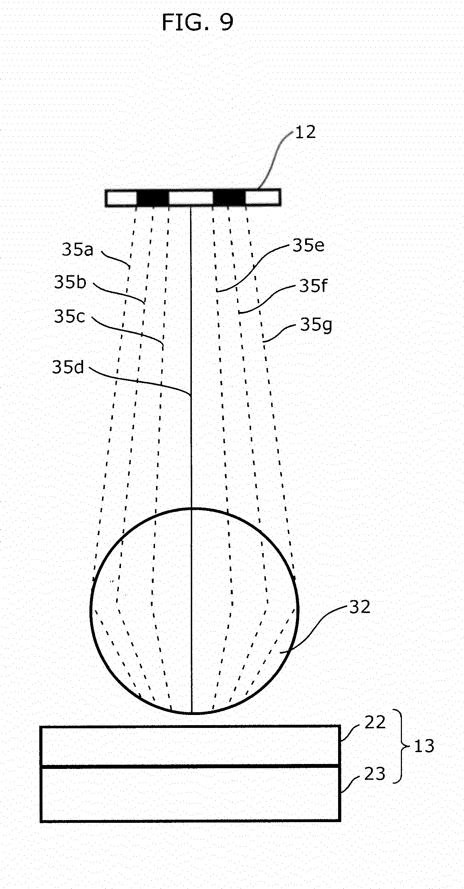

FIG. 6 is a diagram which schematically shows a transmission image 27 of the medicine package 21 which is the conventional one and is irradiated with the diffused light. FIG. 7 is a diagram which shows an actual transmission image 27 of the medicine package 21 irradiated with the diffused light. FIGS. 8 and 9 are diagrams for illustrating light rays which pass through the semi-transparent tablet 32 among light rays which can be received by the camera unit 12. FIG. 8 is a conceptual diagram which shows the light passing through the semi-transparent tablet 32 in a condition where the diffused light is used as lighting, while FIG. 9 is a conceptual diagram which shows the light passing through the semi-transparent tablet 32 in a condition where the parallel light is used as lighting. FIG. 8 is a diagram which shows a conventional example, while FIG. 9 is a diagram which shows an example according to Embodiment 1.

As shown in FIGS. 6 and 7, the opaque tablet image 53 clearly appears in the transmission image 27 of the medicine package 21 irradiated with the diffused light. However, an image of a transparent film of the medicine package 21, which serves as a background, transmits the light, and a semi-transparent tablet image 54 may also transmit the light depending on the light transmittance of a tablet. Accordingly, if the diffused light is used as is shown in FIGS. 6 and 7, the brightness of the background and that of the semi-transparent tablet image 54 are at the same level. Thus, even if processing, such as binarization, or edge extraction, is performed on a captured image, a degree of the extraction is such that only the periphery of the semi-transparent tablet image 54 can be slightly extracted. It is difficult to clearly separate the semi-transparent tablet image 54 from the background. In such a case, it is also difficult to adjust a threshold value by binarizing the captured image, in addition, the outline of the semi-transparent tablet image 54 may often be broken up. Furthermore, smoothing processing is performed on the captured image as processing for removing other noises, causing the outline of the semi-transparent tablet image 54 to be removed together with the noises. For this reason, the semi-transparent tablet 32 cannot be detected precisely in the conventional example shown in FIG. 8. Here, the background indicates an image of an area where no tablet exists in the captured image, and also indicates an image of an area in which the light passes through only a transparent film.

In view of the above, in the present embodiment, the brightness of the periphery of the semi-transparent tablet image 52 is lowered, and not the diffused light but the parallel light is used for illuminating the medicine package 21 as shown in FIGS. 4 and 5, in order to clearly discriminate the periphery of the semi-transparent tablet image 52 from the transparent film of the medicine package 21, which serves as the background.

As shown in FIGS. 8 and 9, the semi-transparent tablet 32 is a rounded tablet. Accordingly, the semi-transparent tablet 32 serves as a lens, so that the light passing through the periphery of the semi-transparent tablet 32 is refracted, while the light passing through the center thereof goes straight.

In the conventional configuration shown in FIG. 8, the light which can be received by the camera unit 12 goes along lines represented by lines 35a, 35b, 35c, 35e, 35f, and 35g. In the conventional example, the light passing through a center of the semi-transparent tablet 32 linearly goes along the line 35d, while the light becomes largely refracted in the semi-transparent tablet 32, as an area where the light passes through is close to the periphery, as shown by lines 35c, 35b, and 35a. If the light emitting to the semi-transparent tablet 32 is diffused light as in the conventional case, the light varies in the illumination angles. Accordingly, in the conventional example, the emitted light reaches the camera unit 12 at an any illumination angle made by any light denoted by the lines 35a, 35b, 35c, 35d, 35e, 35f, and 35g. The light received by the camera unit 12 is inclined largely as the light approaches to the periphery from the center of the camera unit 12. This is because a picture element of the camera unit 12 captures the image of the semi-transparent tablet 32 via a lens. Accordingly, a pixel having low brightness, which indicates the semi-transparent tablet 32 and is intended in the present embodiment, is not generated in the conventional configuration shown in FIG. 8. In other words, in the conventional example, an outline of the semi-transparent tablet 32 does not clearly appear in the transmission image 27 obtained by the camera unit 12, as shown in FIGS. 6 and 7.

In contrast, in the configuration of the present embodiment shown in FIG. 9, the light ray 33 which is the parallel light emitted from the lighting unit 13 is emitted at the illumination angle in a small variation. Accordingly, in the present embodiment, a portion which does not transmit the light is generated in the semi-transparent tablet 32. In the present embodiment, the light emitted at an angle close to the illumination angle of the parallel light represented by the line 35d reaches the camera unit 12. However, in the present embodiment, the light ray 33 which is an illumination light ray emitted by the parallel-light conversion unit 22 is the light which goes in one way. Accordingly, in the example of the present embodiment, the light rays which are indicated by the lines 35a, 35b, 35c, 35e, 35f, and 35g and have different illumination angles with respect to an optical axis of the parallel light are small in an amount of the light. Therefore, in the present embodiment, the brightness of the periphery of the semi-transparent tablet image 52 lowers. In other words, according to a configuration of the present embodiment shown in FIG. 9, the transmission image 26 can be obtained in which the brightness of a center part of the semi-transparent tablet image 52 is high, and the brightness of the peripheral part thereof is low. Accordingly, as shown in FIGS. 4 and 5, the outline of the semi-transparent tablet image 52 clearly appears in the transmission image 26 obtained by the camera unit 12.

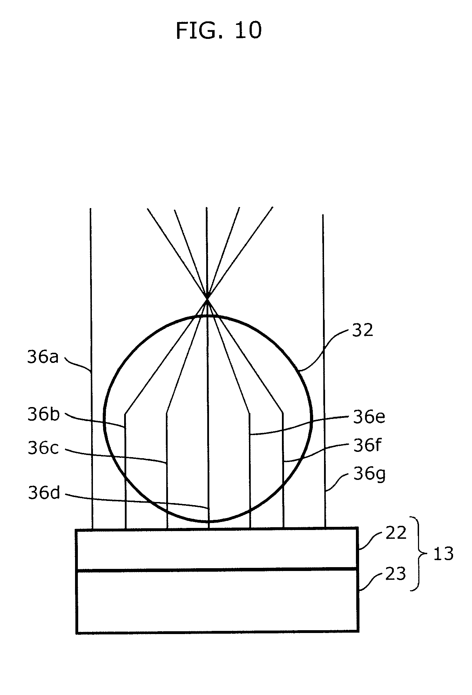

FIG. 10 is a diagram for illustrating the parallel light rays emitted by the lighting unit 13 according to Embodiment 1 of the present invention. As shown in FIG. 10, among the parallel light rays emitted by the lighting unit 13, light rays (the lines 36a and 36g) passing only through the medicine package 21 are not refracted and go straight, while light rays (the lines 36b to 36f) passing through the semi-transparent tablet 32 are largely refracted. Particularly, since the light is significantly refracted at the peripheral part of the semi-transparent tablet 32, the light does not reach the camera unit 12, and the brightness of the periphery of the semi-transparent tablet image 52 lowers. In contrast, a refraction amount of the light is small around the center of the semi-transparent tablet 32, so that the camera unit 12 receives the light, and the brightness of the center and the vicinity thereof in the semi-transparent tablet image 52 increases.

Here, a refractive index is determined according to a curvature factor of the semi-transparent tablet 32. Accordingly, the brightness of the peripheral part of the semi-transparent tablet image 52 becomes low irrespective of the transmittance of the light which passes through the semi-transparent tablet 32. Using the property that the brightness of the peripheral part of the semi-transparent tablet image 52 becomes low due to the parallel light, the tablet inspection device 11 according to the present embodiment can clearly separate the semi-transparent tablet image 52 from the background in the transmission image 26, to thereby precisely detect the area of the semi-transparent tablet image 52.

In the transmission image 26 according to the present embodiment, which is obtained by irradiation with the parallel light as shown in FIGS. 4 and 5, an outline of the opaque tablet image 51 is clear, and an outline of the peripheral part of the semi-transparent tablet image 52 is also clear. Accordingly, the image processing unit 15 can easily detect the respective outlines of the opaque tablet image 51 and the semi-transparent tablet image 52 from the transmission image 26. In Embodiment 1, the detection of the semi-transparent tablet 32 is processing performed in such a manner that pattern matching is performed on the semi-transparent tablet image 52 in the transmission image 26 with a sample image, and the number of tablets of the detected semi-transparent tablet 32 is calculated.

The opaque tablet 31 and the semi-transparent tablet 32 are different from each other in the light transmittance, so that the opaque tablet image 51 and the semi-transparent tablet image 52 are different from each other. According to the present embodiment, the opaque tablet image 51 and the semi-transparent tablet image 52 can be clearly distinguished. In other words, the image processing unit 15 detects an image of a tablet, which has a pixel with high brightness in the center part thereof, as the semi-transparent tablet image 52 among the detected images of the tablets in the transmission image 26.

The image processing unit 15 performs thinning and edge extraction on the transmission image 26 using an external value, before performing the pattern matching with the sample image, so as to detect the outline of the semi-transparent tablet image 52 from the transmission image 26. As described above, the thinning and the edge extraction are performed on the transmission image 26 using the external value, to thereby remove a noise and clarify the outline of an image of a tablet. The semi-transparent tablet image 52 has the peripheral part having a constant width in which the brightness is low, as described above. However, a posture of a tablet and a relative position of the tablet with respect to the camera unit 12 cause a refractive ratio of the light reaching the camera unit 12 to vary. Accordingly, the width of the peripheral part in which the brightness is low varies even in the same type of tablet. The refractive ratio varies gradually from the center to the periphery of the semi-transparent tablet image 52, so that the brightness of the peripheral part of the semi-transparent tablet image 52 also varies gradually from an inne'r part of the peripheral part. Here, the outermost periphery of the semi-transparent tablet image 52 can remain by performing the thinning which causes only the external value having a large, variation amount to be left, upon the edge extraction by differential processing, using the property that the brightness extremely varies. The outermost periphery, i.e., a size of the outline of the semi-transparent tablet image 52 is determined according to a size of each tablet. Accordingly, in an edge image, the pattern matching can be performed which is not influenced by the posture or the position of the tablet, and thus is stabled.

Next, a tablet inspection method performed using the aforementioned tablet inspection device 11 is described.

FIG. 11 is a flowchart which illustrates the tablet inspection method performed using the tablet inspection device 11 according to Embodiment 1.

First, the light emitting unit 23 of the lighting unit 13 emits diffused light, and the diffused light is converted to parallel light by the parallel-light conversion unit 22. The camera unit 12 captures an image of the medicine package 21 which encloses therein the semi-transparent tablet 32 and is irradiated with the light ray 33 which is the converted parallel light, to thereby obtain the transmission image 26 including the semi-transparent tablet image 52 whose peripheral part has low brightness (Step S01). Here, the transmission image 26 includes the opaque tablet image 51 and the semi-transparent tablet image 52.

Next, the image processing unit 15 detects the semi-transparent tablet image 52 from the transmission image 26. In order to clarify the respective outlines of the opaque tablet image 51 and the semi-transparent tablet image 52, the image processing unit 15 performs Canny Edge Detection and thinning using the external value on the transmission image 26 (Step S02).

The image processing unit 15 performs the pattern matching on an edge image obtained by the edge detection and the thinning in Step S02 with the sample image of the semi-transparent tablet image 52, to thereby detect the semi-transparent tablet image 52. The image processing unit 15 calculates the number of images of the detected semi-transparent tablet image 52 as the number of tablets of the semi-transparent tablet 32 (Step S03).

Hereinafter, a method for detecting the semi-transparent tablet image 52 is described in detail. The image processing unit 15 produces a sample image which is exclusively for the outline of the semi-transparent tablet image 52 based on the sample image of the semi-transparent tablet 32 described in the prescription. The sample image of the semi-transparent tablet 32 may be memorized in advance by the image processing unit 15, or may be obtained from outside. The image processing unit 15 extracts, using the pattern matching, an image similar to the produced sample image from the edge images in the transmission image 26 of the medicine package 21, to thereby detect a candidate of the semi-transparent tablet image 52. Consideration is given to a case where there are the opaque tablet image 51 and the semi-transparent tablet image 52 each having a periphery shape similar to each other. In such a case, the semi-transparent tablet image 52 is to be detected from the transmission image 26 using the pattern matching, the opaque tablet image 51 may be detected as the semi-transparent tablet image 52. In view of the above, in order to precisely detect the semi-transparent tablet image 52, the image processing unit 15 detects an image having the high brightness at the center part thereof as the semi-transparent tablet image 52 from among the candidates of the semi-transparent tablet image 52. For example, if a difference between an average brightness of the peripheral part and that of the center part in the candidate of the semi-transparent tablet image 52 is more than or equal to a predetermined brightness-difference threshold value, it is possible to determine that the candidate is the semi-transparent tablet image 52.

Using processes from Step S01 to Step S03, the semi-transparent tablet 32 enclosed in the medicine package 21 can be precisely calculated.

Next, the image processing unit 15 detects the opaque tablet image 51. First, the image processing unit 15 removes the semi-transparent tablet image 52 from the transmission image 26 of the medicine package 21 (Step S04). The image processing unit 15 performs binarization on the transmission image 26 from which the semi-transparent tablet image 52 has been removed (Step S05). The image processing unit 15 calculates the number of tablets of the opaque tablet 31 from the transmission image 26 to which the binarization has been performed. In the binarized transmission image 26 of the medicine package 21, the opaque tablet image 51 is left behind. Accordingly, the calculated number of tablets indicates the number of tablets of the opaque tablet 31 (Step S06). It should be noted that the calculation processing of the number of tablets of the opaque tablet 31 is not limited to the above. For example, the image processing unit 15 may calculate, after detecting an area and a corner of a tablet from the binarized transmission image 26, the number of tablets of the opaque tablet 31 from the number of areas and the number of corners. The image processing unit 15 may detect the opaque tablet image 51 by performing the pattern matching on the binarized transmission image 26 with a sample image of the binarized opaque tablet image 51, to thereby calculate the number of tablets of the opaque tablet 31. The sample image of the opaque tablet image 51 may be memorized in advance in the image processing unit 15, or may be obtained from outside. Furthermore, the image processing unit 15 may detect the opaque tablet image 51 by performing the pattern matching on the transmission image 26 which is a multiple-value image, with a sample image of the opaque tablet image 51 which is also a multiple-value image, to thereby calculate the number of tablets of the opaque tablet 31. In the above case, the binarization in Step S05 needs not be performed.

Next, the image processing unit 15 compares a sum of the number of tablets of the semi-transparent tablet 32 calculated in Step S03 and the number of tablets of the opaque tablet 31 calculated in Step S06 with the number of tablets described in the prescription, and determines whether or not the proper number of tablets are enclosed in the medicine package 21, to thereby check the number of tablets (Step S07). Here, the image processing unit 15 may memorize the number of tablets described in the prescription, or may obtain it from the outside. Using the processes from Step S01 to Step S07, the tablet inspection device 11 can check whether or not the number of tablets enclosed in the medicine package 21 is proper.

Thus, the tablet inspection device 11 can perform inspection on the number of tablets of the semi-transparent tablet 32 irrespective of the transmittance of the light that passes through the semi-transparent tablet 32.

In the aforementioned tablet inspection device 11, the parallel-light conversion unit 22 and the light emitting unit 23 are combined to form the lighting unit 13. However, this is one example. The transparent plate 25 may serve as a louver film, and the lighting unit may be formed by combining the transparent plate 25 and the light emitting unit 23. The parallel-light conversion unit 22 may employ a honeycomb board instead of the louver film. Furthermore, the parallel-light conversion unit 22 may not be used, and parallel light may be emitted from the light emitting unit 23, apart 1 m or more from the medicine package 21. The parallel light may be prepared, using reflection on a convex mirror and refraction due to Fresnel lens or a convex lens in a condition that a point light source is employed as a light source.

If the tablet inspection device 11 according to the present embodiment is used, the semi-transparent tablet image 52 surely includes a pixel having high brightness around the center thereof, as shown in FIGS. 4 and 5. Accordingly, even if the opaque tablet image 51 and the sample image of the semi-transparent tablet image 52 are same with each other in shape, the tablet inspection device 11 can determine a tablet as the opaque tablet image 51 unless the pixel with high brightness exists around the center of the tablet. In contrast, if the pixel with the high brightness exists around the center of a tablet, the tablet inspection device 11 can determine that the image relates to the semi-transparent tablet image 52.

With the above, the tablet inspection device 11 can separately detect the opaque tablet image 51 and the semi-transparent tablet image 52.

### [Embodiment 2]

Next, a tablet inspection device according to Embodiment 2 of the present invention is described. The configuration of the tablet inspection device according to Embodiment 2 is same with the one according to Embodiment 1. However, the tablet inspection device according to Embodiment 2 is different from that according to the Embodiment 1 in placement of the camera unit 12.

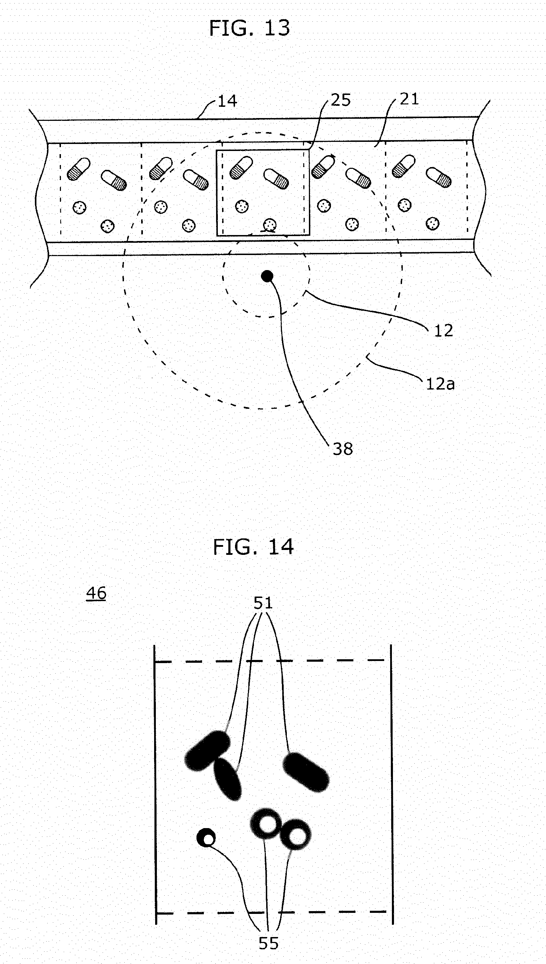

FIG. 12 is a schematic view which shows a positional relationship between the camera unit 12 and the placing table 14, according to Embodiment 2. FIG. 13 is a plan view which shows the medicine package 21 and the placing table 14, according to Embodiment 2. FIG. 14 is a diagram which shows a transmission image 46 of a medicine package shot by the camera unit 12 according to Embodiment 2.

Hereinafter, a point of the Embodiment 2, which is different from Embodiment 1 is described with reference to the drawings.

As shown in FIGS. 12 and 13, in the tablet inspection device according to Embodiment 2, the camera unit 12 is placed in such a position that a line connecting a image-capturing axis 38 of the camera unit 12 and the center of the medicine package 21 defines an angle more than or equal to 120 degrees and less than 160 degrees with respect to a central axis 37 (an optical axis of parallel light rays emitted by the lighting unit 13) of the lighting unit 13. Accordingly, in Embodiment 2, the camera unit 12 is placed in such a position that the image-capturing axis 38 of the camera unit 12 and the central axis 37 of the lighting unit 13 are out of alignment. In other words, in Embodiment 2, the camera unit 12 is placed in such a manner that the image-capturing axis 38 of the camera unit 12 passes through a position apart from the center of the medicine package 21.

Such placement allows, as shown in FIG. 14, an area having high brightness in a semi-transparent tablet image 55 to be obtained at a position out of the center of the semi-transparent tablet image 55, in the transmission image 46 shot by the camera unit 12. The reason is described below.

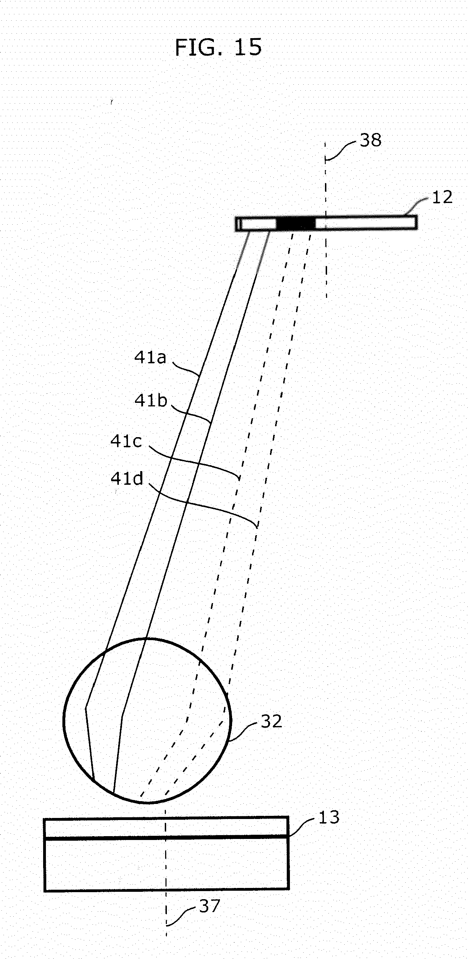

FIG. 15 is a schematic view for illustrating parallel light passing through the semi-transparent tablet 32 according to Embodiment 2.

The camera unit 12 according to Embodiment 2 shoots an image of the medicine package 21 at a position out of the center of an image-capturing area (image-capturing area 12a in FIG. 13) of the camera unit 12. Accordingly, light which passes through the medicine package 21 and reaches the camera unit 12 is inclined with respect to the image-capturing axis 38 of the camera unit 12. Light passing through the semi-transparent tablet 32 among the light reaching the camera unit 12 is indicated by lines 41a, 41b, 41c, and 41d in FIG. 15.

Light passing through a left side (the left side viewed from a front of FIG. 15) of the semi-transparent tablet 32, among the light which reaches the camera unit 12, is parallel to the central axis 37 of the lighting unit 13 because the image-capturing axis 38 of the camera unit 12 is away from the medicine package 21. In other words, the light parallel to the central axis 37 of the lighting unit 13 passes through the left side of the semi-transparent tablet 32, and is refracted, to thereby reach the camera unit 12 along the lines 41a and 41b. In this case, the light emitted from the lighting unit 13 enters the camera unit 12 with little modification, so that the brightness of a part in the transmission image 46, which the light enters becomes high. This is because that the illumination angle of the light entering the semi-transparent tablet 32 and a refraction angle of the light on the semi-transparent tablet 32 are adequate.

However, the light passing through other portions of the semi-transparent tablet 32 among the light entering the camera unit 12 is significantly inclined with respect to the central axis 37 of the lighting unit 13. In Embodiment 2, the light emitted by the lighting unit 13 is the parallel light. Accordingly, light which is emitted by the lighting unit 13 and passes through the other portion of the semi-transparent tablet 32 is hardly allowed to enter the camera unit 12, so that the brightness of the part in the transmission image 46 becomes low.

Accordingly, in Embodiment 2, in the transmission image 46 obtained by the camera unit 12, the part having the high brightness in the semi-transparent tablet image 55 is out of the center part of the semi-transparent tablet image 55.

As described above, if the medicine package 21 is shot at a position out of the center part of the image-capturing area 12a of the camera unit 12, the semi-transparent tablet image 55 has a distinguishing irregular donut shape in which the high-brightness part is out of the center thereof, as shown in FIG. 14. Thus, when detection of the outline of the semi-transparent tablet image 55 is performed in the image processing unit 15, a shape of an inner periphery which defines an area having the high brightness is determined in addition to the shape of the periphery serving as the outline, to thereby allowing the semi-transparent tablet image 55 having the distinguishing inner periphery to be easily identified. In other words, when the center of the outline and the center of the area having the high brightness are away from each other by a predetermined distance or more in the semi-transparent tablet image 55, the area can be identified as the semi-transparent tablet image 55. The above-described processing can prevent erroneous detection such as detection of a circle shape printed on the medicine package 21 as the semi-transparent tablet 32.

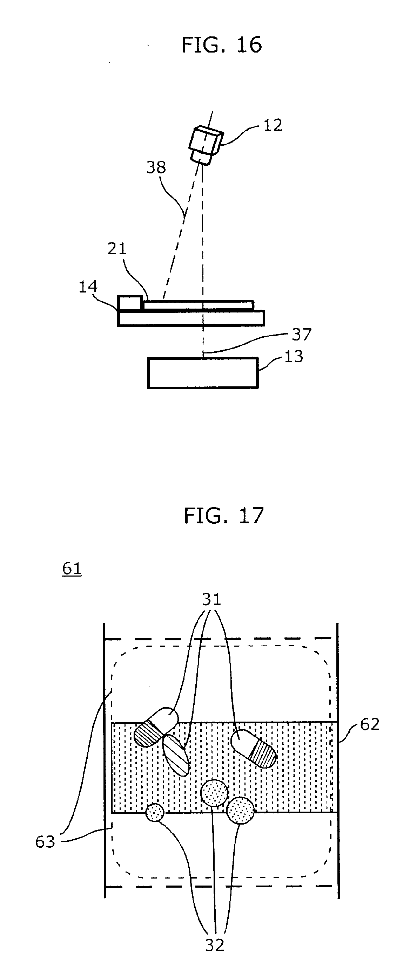

In order to obtain the distinguishing semi-transparent tablet image 55, the camera unit 12 may be placed in such a manner that the image-capturing axis 38 of the camera unit 12 is inclined with respect to the central axis 37 of the parallel light emitted from the lighting unit 13. As shown in FIG. 16, for example, the camera unit 12 positioned on the central axis 37 of the parallel light may be placed in such a manner that the image-capturing axis 38 of the camera unit 12 is inclined with respect to the central axis 37.

### [Embodiment 3]

Next, a tablet inspection device according to Embodiment 3 of the present invention is described. A configuration of the tablet inspection device according to Embodiment 3 is same with that according to Embodiment 1. However, Embodiment 1 and Embodiment 3 are different from each other in a part of processing performed by the image processing unit 15.

In the aforementioned Embodiment 1, the medicine package 21 is made up of a transparent film. However, a white film for printing thereon a name of a patient or other information may be used in a part of the medicine package 21. Since the transparent film and the white film are different from each other in a light transmittance, the tablets positioned on the respective films may differently look. In Embodiment 3, a tablet inspection device capable of precisely checking whether or not the number of tablets is adequate even in such a case.

FIG. 17 is a plan view which shows a medicine package according to Embodiment 3 of the present invention.

Hereinafter, a point of the Embodiment 3 which is different from Embodiment 1 is described with reference to the drawings.

Since a typical medicine package is made up of a transparent film, transmittance thereof is uniform. However, there is a medicine package 61 among medicine packages, which has, on the other side, an area in which the transmittance is different from that in other areas. As shown in FIG. 17, this type of the medicine package 61 is formed by a printed area 62 having, for printing, the light transmittance lower than that of the transparent film and a non-printed area 63 which is the transparent film. The printed area is typically an area of a white film, and a name of a patient, information of a tablet enclosed in the medicine package 61, and the like are printed thereon. Here, a color of a film of the printed area 62 is not limited to white.

The printed area 62 causes the light from the lighting unit 13 to be diffused or weakened. Accordingly, if the semi-transparent tablet 32 exists on a boundary line between the printed area 62 and the non-printed area 63, the brightness of one semi-transparent tablet 32 differs between a side of the printed area 62 and a side of the non-printed area 63. As the result, when the outline of the semi-transparent tablet 32 is to be detected, detection may be performed erroneously. Particularly when the printed area 62 is positioned in a side of the lighting unit 13, the parallel light from the lighting unit 13 is diffused before reaching the semi-transparent tablet 32. This remarkably exhibits the difference of the brightness between the semi-transparent tablet 32 on the printed area 62 and that on the non-printed area 63. In other words, if the printed area 62 is positioned in the side of the lighting unit 13, the brightness of the semi-transparent tablet 32 becomes susceptible to the printed area 62, in comparison with the case where the printed area 62 is positioned in the side of the camera unit 12.

In view of the above, the image processing unit 15 in the tablet inspection device according to Embodiment 3 divides a transmission image of the medicine package 61 between the printed area 62 and the non-printed area 63 upon detecting the outline of the semi-transparent tablet image 52 from the transmission image of the medicine package 61. The image processing unit 15 detects the outline of the semi-transparent tablet image 52 using two threshold values including a printed-area threshold value for detecting the outline of the semi-transparent tablet 32 in the printed area 62, and a non-printed-area threshold value for detecting the outline of the semi-transparent tablet 32 in the non-printed area 63. The threshold value as defined here is a binarized threshold value in the Canny Edge Detection performed in Step S02 or a binarized threshold value in the binarization processing of the transmission image 26 performed in Step S05, as shown in FIG. 11. Furthermore, a coefficient of a differential filter in the Canny Edge Detection may be changed between the printed area 62 and the non-printed area 63. The coefficient of the differential filter is a value for defining a size of the differential filter, for example.

As described above, the image processing unit 15 uses the two threshold values for detecting the outline of the semi-transparent tablet image 52, to thereby detect the semi-transparent tablet 32 as a single tablet, even if the semi-transparent tablet 32 exists across the printed area 62 and the non-printed area 63.

When performing edge extraction, the image processing unit 15 recognizes the longest line and the second longest line as the boundary lines of the printed area 62, so as to identify a space between the two lines as the printed area 62. The printed area 62 is defined in a broad range for making the printed area 62 be prominent. Thus, the printed area 62 can be easily identified by detecting the longest line and the second longest line. If the line is broken up by a tablet positioned on the boundary of the printed area 62 and the non-printed area 63, processing to repair the broken line may be performed.

The arrangement of the printed area 62 is not limited to the one which is shown in FIG. 17. The printed area 62 may be identified by processing shown below, in order to identify the printed area 62 in any arrangement. For example, based on the result of the edge extraction, the image processing unit 15 recognizes, as the boundary line, the line having more than or equal to a predetermined distance threshold vale, and calculates an average value of the brightness of each of areas separated by the boundary line. The image processing unit 15 may detect, as the printed area 62, an area having an average value of the brightness lower than or equal to the brightness threshold value or an area having the smallest average value of the brightness.

Furthermore, the light is diffused when passing through the printed area 62, as described above. Accordingly, in order to prevent the diffusion of the light due to the printed area 62, the lighting unit 13 may cause the medicine package 21 to be irradiated with parallel light made up of infrared light having a property that the light is hardly diffused.

### [Industrial Applicability]

The present invention is useful as a tablet inspection device used in a pharmacy, a hospital facility, and the like that conduct dispensing work, for example.

### [Reference Signs List]

- 11: Tablet inspection device
- 12: Camera unit
- 12a: Image-capturing area
- 13: Lighting unit
- 14: Placing table
- 15: Image processing unit
- 17: Display unit
- 18: Controlling unit
- 21, 61: Medicine package
- 22: Parallel-light conversion unit
- 22a: Transmission band
- 22b: Absorption band
- 22c, 22d: Laminated body
- 23: Light emitting unit
- 24: Guide unit
- 25: Transparent plate
- 26, 27, 46: Transmission image
- 31: Opaque tablet
- 32: Semi-transparent tablet
- 33: Light ray
- 35a, 35b, 35c, 35d, 35e, 35f, 35g, 36a, 36b, 36c, 36d, 36e, 36f, 36g, 41a, 41b, 41c, 41d: Line
- 37: Central axis
- 38: Image-capturing axis
- 51, 53: Opaque tablet image
- 52, 54, 55: Semi-transparent tablet image
- 62: Printed area
- 63: Non-printed area

## Claims

1. A tablet inspection device comprising:
a lighting unit configured to emit parallel light to a medicine package enclosing therein a semi-transparent tablet that is capable of transmitting light;
an image-capturing unit configured to capture an image of the medicine package irradiated with the parallel light, so as to obtain a transmission image of the medicine package; and
an image processing unit configured to detect, as an area of the semi-transparent tablet, an area having a center part and a periphery part which has brightness lower than brightness of the center part, in the transmission image.

2. The tablet inspection device according to Claim 1,
wherein the lighting unit includes:
a light emitting unit configured to emit diffused light; and
a parallel-light conversion unit configured to convert the diffused light emitted by the light emitting unit to the parallel light.

3. The tablet inspection device according to Claim 2,
wherein the parallel-light conversion unit is a louver film or a honeycomb board.

4. The tablet inspection device according to any one of Claims 1 to 3,
wherein the image-capturing unit is placed so that an angle defined by an optical axis of the parallel light emitted by the lighting unit and a line connecting an image-capturing axis of the image-capturing unit and a center of the medicine package is more than or equal to 120 degrees and less than 160 degrees.

5. The tablet inspection device according to any one of Claims 1 to 4,
wherein the image-capturing unit is placed so that an image-capturing axis of the image-capturing unit and an optical axis of the parallel light emitted by the lighting unit are out of alignment.

6. The tablet inspection device according to any one of Claims 1 to 5,
wherein the image-capturing unit is placed so that an image-capturing axis of the image-capturing unit is inclined with respect to an optical axis of the parallel light emitted by the lighting unit.

7. The tablet inspection device according to any one of Claims 4 to 6,
wherein the image processing unit is configured to detect, as the area of the semi-transparent tablet, an area which is included in the transmission image and in which a center of a center part of an image of the semi-transparent tablet and a center of an outline of the image of the semi-transparent tablet are different from each other, the center part having high brightness, and the outline having brightness lower than the brightness of the center part.

8. The tablet inspection device according to any one of Claims 1 to 7,
wherein the medicine package includes a printed area with printing, and a non-printed area which has light transmittance higher than light transmittance of the printed area, and
the image processing unit is configured to detect: (i) a first outline from an image of the printed area in the transmission image, using a printed-area threshold value; (ii) a second outline from an image of the non-printed area in the transmission image, using a non-printed-area threshold value; and (iii) the area of the semi-transparent tablet based on the first and the second outlines detected from the transmission image.

9. The tablet inspection device according to Claim 8,
wherein the printed area is placed in a side closer to the lighting unit.

10. The tablet inspection device according to any one of Claims 1 to 8,
wherein the image processing unit is configured to detect the area of the semi-transparent tablet by performing pattern matching on the transmission image with a sample image, using a property that brightness is disproportionate from a periphery part to a center part of an image of the semi-transparent tablet in the transmission image.

11. The tablet inspection device according to any one of Claims 1 to 10,
wherein the parallel light emitted by the lighting unit to the medicine package is infrared light.

12. A tablet inspection method comprising:
obtaining a transmission image that is an image of a medicine package, in a state that the medicine package enclosing therein a semi-transparent tablet that is capable of transmitting light is irradiated with parallel light;
detecting, as an image of the semi-transparent tablet, an area including a center part and a periphery part which has brightness lower than brightness of the center part, in the transmission image; and
inspecting the medicine package enclosing therein the semi-transparent tablet, based on a result of the detecting.

13. The tablet inspection method according to Claim 12,
wherein in the obtaining, the transmission image is obtained using an image-capturing unit placed so that an optical axis of the parallel light and an image-capturing axis of the image-capturing unit are out of alignment.

14. The tablet inspection method according to Claim 12 or 13,
wherein in the detecting, as an area of the semi-transparent tablet, an area which is included in the transmission image and in which a center of a center part of the image of the semi-transparent tablet and a center of an outline of the image of the semi-transparent tablet are different from each other, the center part having high brightness, and the outline having brightness lower than the brightness of the center part.

15. The tablet inspection method according to any one of Claims 12 to 14,
wherein the detecting further includes:
removing an area of the semi-transparent tablet detected from the transmission image;
performing binarization on the transmission image from which the area of the semi-transparent tablet has been removed;
detecting an area of an opaque tablet from the transmission image on which the binarization has been performed; and
inspecting the semi-transparent tablet and the opaque tablet by determining whether or not a sum of the number of tablets of the semi-transparent tablet and the number of tablets of the opaque tablet is appropriate in number.
